# EUROPÄISCHE PATENTSCHRIFT

(11) **EP 0 911 072 B1**
(45) Veröffentlichungstag und Bekanntmachung des Hinweises auf die Patenterteilung: **20.08.2003**
(21) Anmeldenummer: 98120003.3
(22) Anmeldetag: 23.10.1998
(51) Int. Cl.: B01D 53/56, C04B 7/36, C04B 7/60, B01D 53/74

(54) **Verfahren und Vorrichtung zur Verringerung von NOx-Emissionen**
Method and apparatus for reducing emissions of NOx
Procédé et dispositif pour la réduction des émissions de NOx

(30) Priorität: 23.10.1997 DE 19746817
(43) Veröffentlichungstag der Anmeldung: 28.04.1999
(73) Patentinhaber: Rheinkalk GmbH, 42489 Wülfrath (DE)
(72) Erfinder: Fröhlich, Armin Dr., 53925 Kall-Sötenich (DE); Mönnig, Maria Regina, 50937 Köln (DE); Happrich, Siegfried, 53925 Kall-Sötenich (DE)
(74) Vertreter: Cohausz & Florack

(56) Entgegenhaltungen:
- EP-A- 0 287 224
- EP-A- 0 359 286
- EP-A- 0 391 463
- DE-A- 2 601 077

## Beschreibung

Die Erfindung betrifft ein Verfahren und eine Vorrichtung zur Verringerung von NOₓ-Emissionen im Abgas einer Anlage zur Herstellung von Zementklinker mit Drehrohrofen und Schwebegaswärmeaustauscher, bei der der NOₓ-Abbau im Temperaturbereich von ca. 450 bis 800 °C und in oxidierender Atmosphäre mit einer Luftzahl λ > 1 erfolgt.

Bei allen technischen Verbrennungsvorgängen entstehen verfahrensbedingt Stickstoffoxide, NOₓ, nämlich Stickstoffmonoxid, NO, und Stickstoffdioxid, NO₂, aus Luftsauerstoff, Luftstickstoff und den stickstoffhaltigen Verbindungen, die im Brennstoff enthalten sind. Bei Flammentemperaturen oberhalb 1600 °C wird bei ausreichend langer Verweilzeit der Verbrennungsgase in der Flamme aus molekularem Stickstoff im wesentlichen Stickstoffmonoxid, NO, gebildet.

Das oberhalb 1600 °C gebildete Stickstoffoxid NO ist eine stark endotherme Verbindung und wird im Temperaturbereich von ca. 800 bis 450 °C teilweise wieder zersetzt in Stickstoff und Sauerstoff. Bei schnellem Abkühlen auf unter 450 °C bleibt Stickstoffoxid NO metastabil erhalten.

Ein Beispiel dafür ist die Herstellung von Zementklinker in Produktionsanlagen mit Drehrohrofen und Schwebegaswärmetauscher.

Zementklinker wird üblicherweise durch thermische Behandlung eines aufbereiteten, vorgewärmten Rohstoffgemisches in einem Drehrohrofen erzeugt. Bei Anlagen mit Ofenwärmenutzung durchläuft das Rohmehl dabei eine Anzahl von Gaswärmetauscherstufen, wird vorgewärmt, hierbei vorentsäuert (kalziniert) und in der Sinterzone des Drehrohrofens zu Zementklinker gesintert und anschließend gekühlt.

In der Sinterzone des Drehrohrofens werden Flammentemperaturen von ca. 2000 °C erreicht. Dabei wird neben Stickstoffmonoxid, NO, auch Stickstoffdioxid, NO₂, gebildet, und zwar etwa im Verhältnis 90 % NO zu 10 % NO₂.

Die Wärmetauscherstufen sind üblicherweise als Zyklone ausgebildet, in denen das Rohmehl, von den entgegenströmenden heißen Abgasen aus dem Drehrohrofen erwärmt, abgeschieden wird. Das Ofenabgas hat bei Eintritt in die unterste Wärmetauscherstufe etwa eine Temperatur von 1000 °C. Das Abgas verläßt die oberste Wärmetauscherstufe mit einer Temperatur von etwa 250 bis 350 °C.

Der Anteil der Stickoxide, NOₓ, im Abgas insgesamt ist von Anlage zu Anlage verschieden, da in allen Öfen unterschiedliche Randbedingungen vorliegen. Auch innerhalb einer Anlage werden ebenfalls große Schwankungen im Gehalt der Stickoxide beobachtet, je nach Anlage und je nach den verschiedenen eingesetzten Brennstoffen.

Um die behördlich vorgeschriebenen Grenzwerte einhalten zu können, sind Maßnahmen zur Verminderung des Stickoxidgehaltes erforderlich. Es ist bekannt, in der Hauptfeuerung der Drehrohrofenanlage unter Berücksichtigung der Zusammenhänge von Brennstoffbeschaffenheit, Flammentemperatur, Flammenform, Verweilzeit und Luftüberschuß, daß einige Parameter zumindest zum Teil beeinflußt werden können, um primär die Bildung von Stickoxiden zu verringern. In den in Abgasrichtung gesehen nachfolgenden Anlagenteilen wurde aber die Verweilzeit der Ofengase im Temperaturbereich von ca. 450 °C bis 800 °C bisher bezüglich NOₓ-Reduzierung nicht berücksichtigt.

Bei den Bedingungen im Wärmetauscher handelt es sich nicht um ein statisches Gleichgewicht sondern um ein dynamisches. Daher ist der NOₓ-Zerfall ganz entscheidend von der Verweilzeit des Gases in dem Temperaturbereich von ca. 450 °C bis 800 °C abhängig. Demnach bestimmt die Luftströmungsgeschwindigkeitsverteilung im relevanten Temperaturbereich des Wärmetauschers die Abbaurate. Somit wird der Zerfall wie auch die Bildung sowohl von der Temperatur wie auch von der Luftzahl λ und von der Verweilzeit beeinflußt.

Bekannt ist zum Beispiel aus der Zeitschriftenveröffentlichung in ZKG International 49 (1996) Nr. 10, S. 545 bis 560, den Stickoxidgehalt der Drehrohrofenabgase durch Zugabe des Reduktionsmittels Ammoniak, NH_{3,} gasförmig oder als NH₃-Wasser im Wärmetauscherbereich eine Verringerung des NOₓ-Gehaltes zu erreichen. Eine optimale NH₃-Reduzierung ergibt sich aber erst bei höheren Temperaturen von etwa 900 °C.

Bekannt ist auch, durch andere verfahrenstechnische Maßnahmen, zum Beispiel durch Überschuß an Kohlenmonoxid, CO, reduzierende Bedingungen mit λ < 1 im Kalzinator einzustellen und durch längere Reaktionszeiten unter Beibehaltung der reduzierenden Bedingungen den Abbau von Stickoxid, NO, positiv zu beeinflussen. Dabei muß jedoch gleichzeitig darauf geachtet werden, daß die Grenzwerte für CO-Emissionen nicht überschritten werden. Man benötigt dann z.B. eine gestufte Feuerungstechnik für die Nachverbrennung des CO.

Das für Verbrennungskraftmaschinen bekannte Verfahren nach DE 196 11 898 A1 arbeitet nach einem grundsätzlich anderen Verfahren mit Sauerstoffanreicherung und weitgehendem Ausschluß von Luftstickstoff von der Teilnahme am Verbrennungsprozeß, so daß eine stark verminderte NOₓ-Bildung nur noch aufgrund des Stickstoffanteils des Kraftstoffes auftritt.

Aus der EP 0 287 224 A2 ist ein Verfahren zum selektiven NOₓ-Abbau aus Verbrennungsabgasströmen bekannt, bei dem zur NOₓ-Reduktion Reaktionsmittel wie Harnstoff und Cyanursäure eingesetzt werden. Eine selbstständige und spontane Zersetzung von NOₓ tritt nicht ein.

Aus der DE 26 01 077 A1 ist ein Verfahren zur Entfernung von Stickstoffoxiden aus einem Verbrennungsabgas in einer Verbrennungseinrichtung mit Wärmeaustauschflächen in einer Zone mit einer Temperatur von mehr als 700 °C bekannt, wobei die Temperatur des Verbrennungsabgases in Abwesenheit eines Katalysators und in Gegenwart von Sauerstoff und einer Ammoniakquelle bei 700 bis 1300 °C gehalten wird. Dieses geschieht in einer Verbrennungsapparatur, bei der metallene Wärmeaustauschflächen in einer stromab von dem auf oberhalb 700 °C befindlichen Verbrennungsabgases gelegenen Zone angeordnet sind. Die Ammoniakquelle wird so in das Verbrennungsabgas eingeführt, daß das Gemisch von Ammoniak und Verbrennungsabgas einen stromabwärts gelegenen Raum durchströmt, in dem die Wärmeübergangsfläche der metallenen Wärmeaustauschoberflächen weniger als 0,5 x 10⁻² m² pro 1 Nm³/H der Verbrennungsabgasströmung beträgt und eine Verweilzeit von bis zu 1 s innerhalb dieses Raumes aufweist, wobei die Temperatur des Verbrennungsabgases im Auslaß dieses Raums oberhalb 700 °C liegt. Nachteilig an diesem Verfahren sind die kostenintensiven Einbauten und die durch das Zuführen der Reaktionsstoffe erhöhten Betriebskosten.

Nachteilig bei diesen verfahrenstechnischen Maßnahmen ist, daß hohe Investitionen für besondere Anlagebauarten und zusätzliche Einrichtungen erforderlich sind. Insbesondere Umbauten vorhandener Anlagen sind kostenintensiv. Der Einsatz von NH₃ zum Beispiel in der selektiven nichtkatalytischen Reduktion führt auch zu erhöhten Betriebskosten. Es sind zum Beispiel zusätzliche sicherheitstechnische Ausrüstungen erforderlich.

Der Erfindung liegt die Aufgabe zugrunde, im Temperaturbereich von ca. 450 bis 800 °C und in oxidierender Atmosphäre mit einer Luftzahl λ > 1 der thermodynamischen Gleichgewichtseinstellung beim NOₓ-Abbau möglichst nahe zu kommen und im Abgas von Anlagen mit feuerungsbedingter NOₓ-Bildung die Grenzwerte für Emissionen sicher einzuhalten, ohne kostenaufwendige Einbauten und/oder Umbauten.

Zur Lösung der technischen Aufgabe wird mit der Erfindung vorgeschlagen, daß man das NOₓ-haltige Abgas durch einen Zyklon zur Erhöhung der Verweilzeit leitet, wobei die Erhöhung der Verweilzeit durch Erzeugen einer erhöhten Druckdifferenz zwischen Zyklon-Eintritt und Zyklon-Austritt erfolgt.

Dies kann vorteilhafterweise dadurch erreicht werden, daß man die Gasgeschwindigkeit im Tauchrohr des Zyklons erhöht, zum Beispiel durch turbulente Strömung. Weitere Möglichkeiten sind eine Verkleinerung des Tauchrohrquerschnittes, eine kegelstumpfartige Ausführung des Tauchrohrs oder eine Verlängerung des Tauchrohrs. Es ist auch möglich, die Baugröße der Zyklone zu erhöhen.

Die Erhöhung der Strömungsgeschwindigkeit im Tauchrohr ist verbunden mit einer Erhöhung der Druckdifferenz im Zyklon. Die erhöhte Gasgeschwindigkeit im Tauchrohr führt nämlich zu einer Druckreduzierung beim Gasaustritt bei gleichzeitigen erheblichen Gegendrücken in der Gaseintrittsöffnung.

Eine vorteilhafte Vorrichtung zur Durchführung des Verfahrens ist derart ausgestaltet, daß in einem aus Lamellen bestehenden Tauchrohr des Zyklons Gasführungseinrichtungen bestehend aus nach innen versetzten, insbesondere von außen verstellbaren Lamellen angeordnet sind.

Das Tauchrohr kann aus Lamellen bestehen, bei denen eine oder mehrere der Lamellen nach innen versetzt sind. Ausgehend von den nach innen weisenden Kanten dieser versetzten Lamellen bilden sich die angestrebten Strömungswirbel, so daß das Gas länger im Zyklon verweilt. Von außen verstellbare Lamellen sind geeignet, um die Verweilzeit optimal an die Betriebsgegebenheiten anpassen zu können.

Im folgenden wird die Erfindung anhand der Zeichnungen Fig. 1 bis Fig. 4 näher erläutert.
Fig. 1 zeigt die Seitenansicht eines Zyklons (1) im Schnittbild.
Fig. 2 zeigt die Draufsicht auf einen Zyklon (1) im Schnittbild.
Fig. 3 zeigt im Detail das Tauchrohr (3) im Schnittbild in der Draufsicht.
Fig. 4 zeigt die Seitenansicht des Tauchrohres (3).

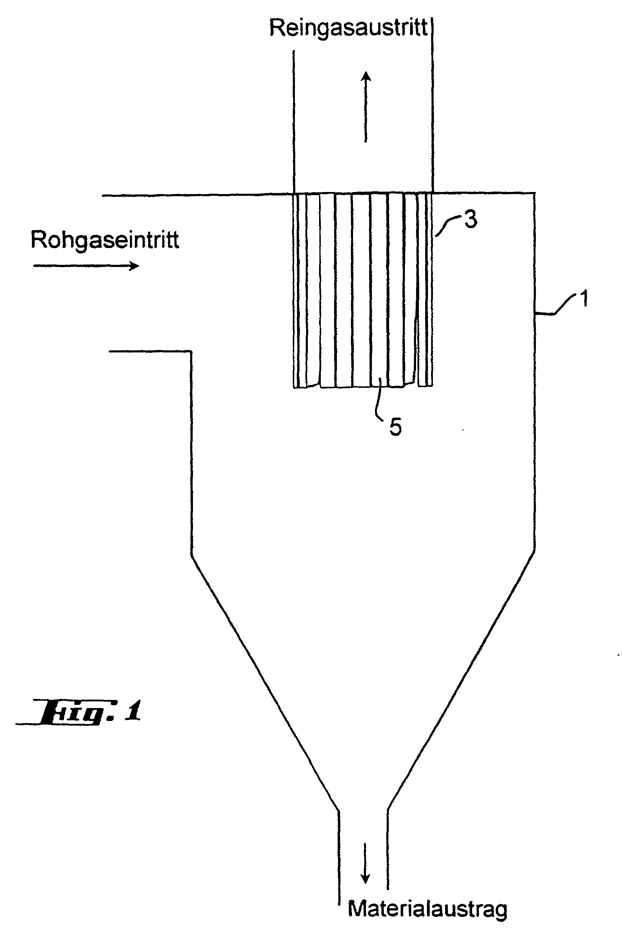

Bei Zementdrehrohrofenanlagen wird häufig das Ofenabgas über Zyklonvorwärmer abgeführt. Die Drehrohrofenabgase durchströmen dabei den Zyklonvorwärmer von unten nach oben im Gegenstrom zum Brenngut. In Fig. 1 ist ein Zyklon mit Tauchrohr (3) dargestellt. Der Rohgaseintritt erfolgt tangential. Das Rohgas besteht aus einer Gas-Feststoffsuspension aus Rohmehl und Drehrohrofenabgas. Im Zyklon (1), der nach dem Prinzip der Fliehkraftabscheidung arbeitet, wird das Rohmaterial abgeschieden und an der Unterseite des Zyklons ausgetragen. Dabei findet ein intensiver Wärmeaustausch zwischen dem Drehrohrofenabgas und dem Brenngut statt. In Fig. 1 ist eine besondere Ausführungsform des Tauchrohres (3) dargestellt, das aus Lamellen (5) bestehen kann. Das Reingas verläßt den Zyklon durch das Tauchrohr (3) und wird der nächst höheren Zyklonvorwärmerstufe zugeführt oder über eine Abgasreinigungsanlage abgeleitet.

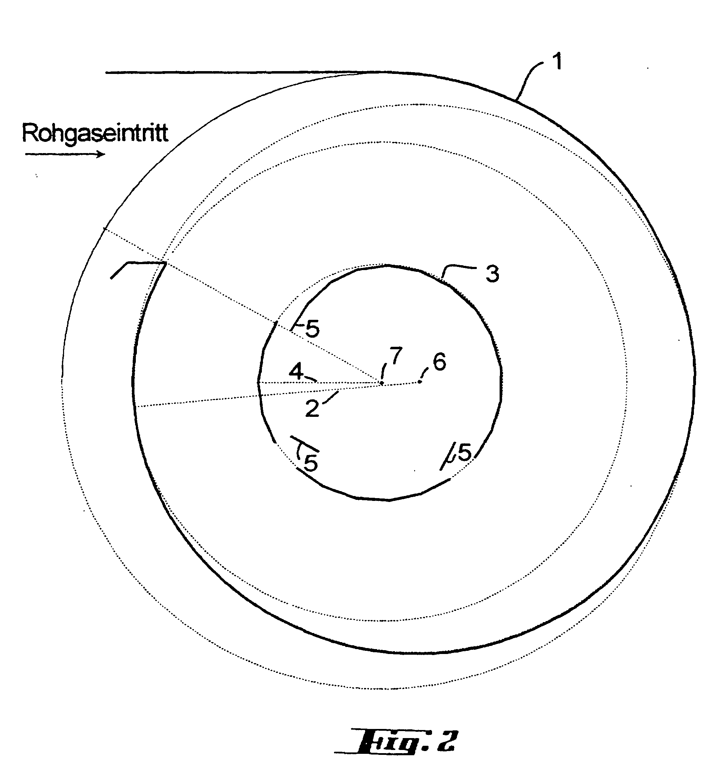

Eine übliche Gestaltungsmöglichkeit des Zyklons ist in Fig. 2 dargestellt. Der Mittelpunkt (7) des Tauchrohres (3) ist gegenüber dem Mittelpunkt (6) der Zyklonwandung (1) in einer bestimmten Richtung verschoben. Die Durchströmung des Zyklonraumes beschreibt in der Draufsicht eine Spirale. Allgemein spricht man daher auch von einem "Spiralgehäuse". Die Strömung ist in den gewählten Beispielen nicht rotationssymetrisch. Die Verhältnisse werden im einzelnen bestimmt durch den Zyklonradius (2) und den Tauchrohrradius (4).

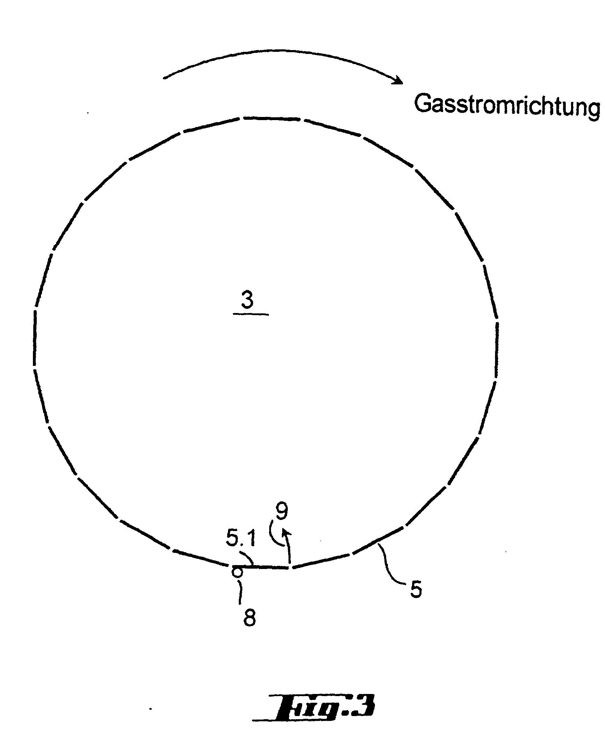

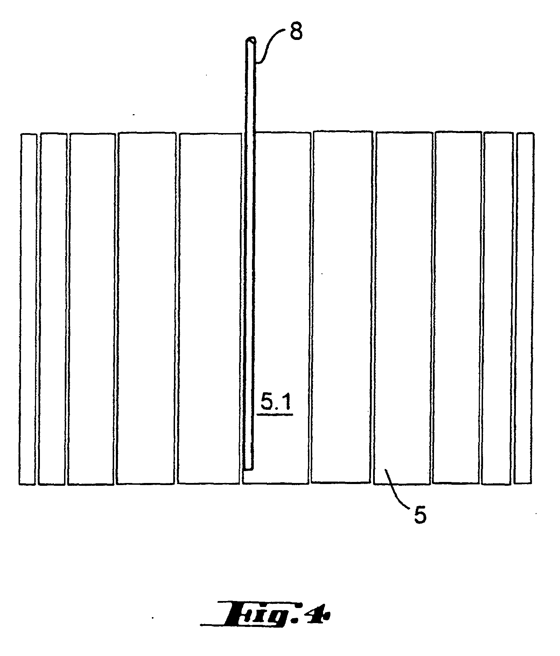

Es wurde gefunden, daß die Verweilzeit im Zyklon erhöht wird, wenn einzelne Lamellen (5) des Tauchrohres (3) nach innen versetzt sind, wie in Fig. 2 dargestellt. Für eine gezielte Steuerung der Verweilzeiterhöhung ist es zweckmäßig, wenn eine oder mehrere Lamellen (5) beweglich gestaltet werden. Wie in Fig. 3 gezeigt, befindet sich die Drehachse (8) an der in Gasstromrichtung gesehen hinteren Kante einer der beweglichen Lamellen (5.1). Die Lamelle kann so verstellt werden, daß die vordere Kante in der Drehrichtung (9) nach innen ausgelenkt wird. Fig. 4 zeigt dieselbe Anordnung von Lamellen (5), drehbarer Lamelle (5.1) und Drehachse (8) in der Seitenansicht.

Es sind eine Vielzahl von unterschiedlichen Gestaltungen mit unterschiedlichen Spiralen in Gebrauch zur Beeinflussung der Strömung und damit der Abscheidung und des Druckverlustes. Auch der Zu- und Abströmquerschnitt kann in verschiedener Weise gestaltet werden.

Erste Betriebserfahrungen mit dem erfindungsgemäßen Verfahren haben gezeigt, daß durch erfindungsgemäße Maßnahmen im Temperaturbereich von ca. 450 bis 800 °C eine erhebliche Verringerung der NOₓ-Emissionen erzielt werden kann, so daß auf die Umrüstung der Anlage zur selektiven, nicht katalytischen Reduktion verzichtet werden konnte.

Als vorteilhaft erwies sich auch, daß der Staubabscheidegrad erhöht wurde.

## Patentansprüche

1. Verfahren zur Verringerung von NOₓ-Emissionen im Abgas einer Anlage zur Herstellung von Zementklinker mit Drehrohrofen und Schwebegaswärmeaustauscher, bei der der NOₓ-Abbau im Temperaturbereich von 450 bis 800 °C und in oxidierender Atmosphäre mit einer Luftzahl λ > 1 erfolgt, **dadurch gekennzeichnet, daß**
man das NOₓ-haltige Abgas durch einen Zyklon zur Erhöhung der Verweilzeit leitet, wobei die Erhöhung der Verweilzeit durch Erzeugen einer erhöhten Druckdifferenz zwischen Zyklon-Einritt und Zyklon-Austritt erfolgt.

2. Verfahren nach Anspruch 1,
**dadurch gekennzeichnet, daß**
man die Verweilzeit der NOₓ-haltigen Abgase durch Erzeugen turbulenter Strömung im Zyklon (1) erhöht.

3. Verfahren nach Anspruch 2,
**dadurch gekennzeichnet, daß**
man die Gasgeschwindigkeit im Tauchrohr (3) des Zyklons (1) erhöht.

4. Vorrichtung zur Durchführung des Verfahrens nach einem der Ansprüche 1 bis 3,
**dadurch gekennzeichnet, daß**
in einem aus Lamellen (5) bestehenden Tauchrohr (3) des Zyklons (1) Gasführungseinrichtungen bestehend aus nach innen versetzten Lamellen (5) angeordnet sind.

5. Vorrichtung nach Anspruch 4,
**dadurch gekennzeichnet, daß**
die Lamellen (5.1) von außen verstellbar sind.

## Claims

1. A method for reducing NOₓ emissions in the exhaust gas of a plant for manufacturing cement clinker comprising a rotary kiln and a suspension type heat exchanger, wherein the decomposition of NOₓ is performed in a temperature range of 450 to 800 °C and in an oxidizing atmosphere at an air ratio of λ > 1,
**characterized in that** the exhaust gas containing NOₓ is directed through a cyclone to prolong the retention time, wherein the prolongation of the retention time is effected by producing a raised pressure difference between the inlet of the cyclone and the outlet of the cyclone.

2. A method as claimed in claim 1,
**characterized in that** the retention time of the exhaust gases containing NOₓ is prolonged by producing a turbulent flow in the cyclone (1).

3. A method as claimed in claim 2,
**characterized in that** the gas velocity in the plunger duct (3) of the cyclone (1) is raised.

4. A device for executing the method according to one of claims 1 to 3,
**characterized in that** gas guide means consisting of inwardly displaced blades (5) are arranged in a plunger duct (3) of the cyclone (1), which consists of blades (5).

5. A device as claimed in claim 4,
**characterized in that** the blades (5.1) are adjustable from outside.

## Revendications

1. Procédé de diminution des émissions de NOₓ dans le gaz résiduaire d'une installation pour la préparation de clinker de ciment avec des fours rotatifs et dispositifs de préchauffage par mise en suspension dans les gaz, dans lequel la dégradation des NOₓ est réalisée dans un intervalle de température allant de 450 à 800°C et sous atmosphère oxydante avec un indice d'air λ > 1, **caractérisé en ce que** l'on fait passer le gaz résiduaire contenant les NOₓ au travers d'un cyclone pour augmenter le temps de séjour, où l'augmentation du temps de séjour est réalisée par la production d'une différence de pression accrue entre l'entrée du cyclone et la sortie du cyclone.

2. Procédé suivant la revendication 1, **caractérisé en ce que** l'on augmente le temps de séjour du gaz résiduaire contenant les NOₓ par production d'un courant turbulent dans le cyclone (1).

3. Procédé suivant la revendication 2, **caractérisé en ce que** l'on augmente le vitesse du gaz dans le tube plongeur (3) du cyclone (1).

4. Dispositif pour réaliser le procédé suivant l'une quelconque des revendications 1 à 3, **caractérisé en ce que** l'on dispose dans un tube plongeur (3) consistant en des lamelles (5), du cyclone (1), des dispositifs de conduite du gaz consistant en des lamelles (5), ajoutées vers l'intérieur.

5. Dispositif selon la revendication 4 **caractérisé en ce que** les lamelles (5.1) sont réglables de l'extérieur.
